# EUROPEAN PATENT SPECIFICATION

(11) **EP 3 028 808 B1**
(45) Date of publication and mention of the grant of the patent: **03.10.2018**
(21) Application number: 14195869.4
(22) Date of filing: 02.12.2014
(51) Int. Cl.: B23Q 11/00

(54) **Adaptive suction hood system and method**
Adaptives Absaughaubensystem und Verfahren
Système de hotte d'aspiration adaptatif et méthode

(43) Date of publication of application: 08.06.2016
(73) Proprietor: Hochschule für angewandte Wissenschaften - Fachhochschule Rosenheim, 83024 Rosenheim (DE)
(72) Inventor: Binninger, Karsten, 83022 Rosenheim (DE)
(74) Representative: Lucke, Andreas

(56) References cited:
- DE-A1- 10 055 044
- DE-A1-102011 103 012
- US-A- 3 370 937

## Description

### FIELD OF THE INVENTION

The present invention relates to suction hood systems. In particular, the present invention relates to a suction hood system with a plurality of collecting units, wherein each collecting unit of the plurality of collecting units is movably attached to a housing of the suction hood system.

### BACKGROUND

Suction hoods are used for collecting cutting chips produced in the process of machining work pieces. In order to guide the cutting chips into the suction hood, an air flow towards a suction hood inlet has to be produced that is strong enough to re-direct the mechanical impulse of the cutting chips towards the suction hood.

As a result, machining of, for example, wood or metal typically requires high air flow towards the suction hood. This air flow has to be even further increased if the distance between the aperture of the suction hood and the work piece and/or the machining tool is large, or if the direction of the initial impulse of the cutting chips greatly deviates from the direction in which the suction hood is positioned.

In this regard, DE 203 18 478 U1 teaches a suction hood for a machine tool having a number of slats which define channels extending in the machine tool periphery direction. Moreover, DE 100 55 044 A1 teaches a cover for a suction hood having an iris for adapting an opening of the suction hood to work-pieces of different sizes. DE 10 2011 103 012 A1 discloses a suction channel having a slidable cover comprising a plurality of suction hoods. US 3 370 937 A1 discloses a ring-shape arrangement of suction hoods. However, all these systems still require high air flow to assure that a large portion of the cutting chips is actually collected which necessitates a correspondingly high energy consumption.

### SUMMARY OF THE INVENTION

In view of this prior art, the problem underlying the invention is to provide a means for collecting cutting chips which has reduced energy consumption while maintaining high cutting chips collecting performance.

This problem is solved by a suction hood system according to claim 1 which comprises a housing and a plurality of collecting units. As used throughout the specification and the claims, the term "collection unit" is intended to specifically include a structural element having several planar surface regions.

In the suction hood system according to claim 1, each collecting unit of the plurality of collecting units is movably attached to the housing via a bearing and configured to be movable between a first position and a second position. Neighboring collecting units among the plurality of collecting units of the suction hood system according to the present invention abut on each other when being in the first positions and abut on each other when being in the second positions.

Thus, the present invention provides a suction hood system that can be adapted to the size of the work piece and/or the machining tool while circumferentially enclosing or confining the work piece and/or the machining tool.

The suction hood system's ability to adapt to the size of the work piece and/or the machining tool allows for reducing the distance between the collecting units and the work piece and/or the machining tool, which results in reduced air flow requirements and hence brings about energy savings. Furthermore, circumferentially enclosing or confining the work piece and/or the machining tool by collecting units eliminates gaps through which the cutting chips may escape from the air flow, thus promoting the overall cutting chips collecting performance.

The plurality of collecting units forms a ring-like shape when being in the first positions. The ring-like shape of the plurality of collecting units allows adapting the suction hood system to a wide variety of work piece and machining tool combinations.

The plurality of collecting units forms a ring-like shape when being in the second positions. Preferably the plurality of collecting units further forms a ring-like shape also in all intermediate positions between the first and second positions.

As stated above, the ring-like shape of the plurality of collecting units allows adapting the suction hood system to a wide variety of work pieces and machining tools. Hence, having a ring-like shape in the first and the second position provides the benefit of being able to adapt the suction hood system to a wide variety of work pieces and machining tools of different shapes and sizes.

Some or all of the bearings are linear bearings and the bearings allow for adjusting a size of a space circumferentially enclosed or confined by the collecting units (12a-22a). Having linear bearings adds to production simplicity and long service intervals.

In a preferred embodiment, a drive mechanism is provided for moving the plurality of collecting units between the first positions and the second positions. A drive mechanism that moves the plurality of collecting units between the first positions and the second positions speeds up the transitioning process between the plurality of collecting units in the first positions and the plurality of collecting units in the second positions and thus facilitates production efficiency when machining work pieces of different sizes or shapes.

In a preferred embodiment, each collecting unit has a first surface that is parallel to a surface of a first abutting collecting unit and a second surface that is parallel to a surface of a second abutting collecting unit. By this arrangement, the size of the gaps through which cutting chips may escape from the suction hood system is minimized and overall system performance is increased.

In a preferred embodiment, a contact surface of two abutting collecting units is perpendicular to a bisecting line bisecting the angle between the directions of motion of the two abutting collecting units. Having a contact surface of two abutting collecting units that is perpendicular to a bisecting line bisecting the angle between the directions of motion of the two abutting collecting units allows for a continuous adjustment of the suction hood system to work pieces and machining tools of different sizes or shapes.

In a preferred embodiment, the number of collecting units is greater than 2 and preferably 6 or 12. Increasing the number of collecting units allows for an approximately circular shape of the space enclosed or confined by the collecting units and thus avoids that different portions of this space exhibit large air flow variations.

In a preferred embodiment, the housing further comprises a plate having an opening around which the collecting units are movably attached. Hence, if the collecting units are placed around the work piece and/or the machining tool, the machining tool can be conveniently positioned relative to the work piece by guiding the machining tool through the opening of the plate. Furthermore the suction hood system can be conveniently positioned relative to the machining tool.

In a preferred embodiment, the collecting units are connected to a drive ring via drive rods. Drive rods are a simple yet effective way of converting a rotational movement, such as the movement of a drive ring, to a linear movement enforced by the linear bearings via which the collecting units are movably attached to the housing. The conversion of the described rotational movement to the described linear movement may also be achieved by using a rotary cam and driving pin connecting the collecting units to the drive ring.

In a preferred embodiment, the drive ring is connected to the plate via a pivot bearing. The pivot bearing allows the drive ring to rotate relative to the plate so that the drive ring drives the drive rods when the drive ring is rotated relative to the plate.

In a preferred embodiment, the drive ring has a gear ring segment which is coupled to a drive, e.g., a mechanical drive or an electrical drive. By controlling the drive, the position of the collecting units can be automatically adapted.

In a preferred embodiment, at least one collecting unit is a suction hood and at least one collecting unit is a blind slat; at least one collecting unit is a suction hood and at least two collecting units are blind slats; at least two collecting units are suctions hoods and at least one collecting unit is a blind slat; all collecting units of the plurality of collecting units are suction hoods; or all collecting units of the plurality of collecting units are blind slats.

As used throughout the specification and the claims, the term "suction hood" is intended to specifically include devices having an inlet or opening at one side of the device through which air is sucked into a space inside the device, wherein the space inside the device is separated from ambient air by a plurality of walls, wherein at least one of said walls has an aperture through which air is drawn out of the device, for example through a pipe connected to the aperture. Furthermore, the inlet or opening of each suction hood through which air is sucked into a space inside the suction hood is preferably faced towards the center of the ring-like shape formed by the plurality of suction hoods.

In contrast thereto, blind slats do not have inlets or openings. Hence, air may be sucked toward an upper opening of the suction hood system by a central aspiration port through the center of the radially enclosing or confining collecting units of the suction hood system.

In a preferred embodiment, the suction hood system further comprises a device for sucking in air, wherein each suction hood has an aperture that is connected to a first end of an air pipe, wherein a second end of said air pipe is connected with the device for sucking in air, and wherein the device is preferably configured to control the amount of air sucked in through each air pipe individually. Alternatively or in addition, the suction hood system may be connected to a central extraction socket.

Individual control of the amount of air sucked through each suction hood allows for taking into account imbalance or changes of radial cutting chip impulse distribution. Furthermore, as the amount of air sucked through each suction hood can be adapted to what is actually required for cutting chips collection, energy consumption is reduced while maintaining high cutting chips collecting performance.

The present invention further provides a method for operating a machining center, including the steps of positioning the suction hood system relative to a work piece and machining the work piece.

### BRIEF DESCRIPTION OF THE FIGURES

Further advantages and features of the invention will become apparent from the following description, in which the invention will be described on the basis of exemplary embodiments with reference to the accompanying drawings, in which:
- Fig. 1a: is a schematic view of a suction hood system according to an exemplary embodiment, wherein the collecting units of the suction hood system are in first positions;
- Fig. 1b: is a schematic view of the suction hood system of Fig. 1a, wherein the collecting units are in second positions;
- Fig. 2a: shows a single collecting unit in form of a suction hood;
- Fig. 2b: shows a single collecting unit in form of a blind slat;
- Fig. 3: shows a suction hood system according to an exemplary embodiment, wherein the suction hood system has a drive mechanism for moving a plurality of suction hoods between first positions and second positions;
- Fig. 4: shows a suction hood system according to an exemplary embodiment, wherein the suction hood system has an electrical or a manual drive mechanism for moving the suction hoods between the first positions and the second positions; and
- Fig. 5: is a schematic view of a suction hood system according to an exemplary embodiment, wherein the suction hood system is connected to a device for sucking in air.

### DESCRIPTION OF THE EXEMPLARY EMBODIMENTS

For the purposes of promoting an understanding of the principles of the invention, reference will now be made to the preferred embodiments illustrated in the drawings and specific language will be used to describe the same. It will, nevertheless, be understood that no limitation of the scope of the invention is thereby intended, such alterations and further modifications in the illustrated device and such further applications of the principles of the invention as illustrated therein being contemplated as would normally occur now or in the future to one skilled in the art to which the invention relates.

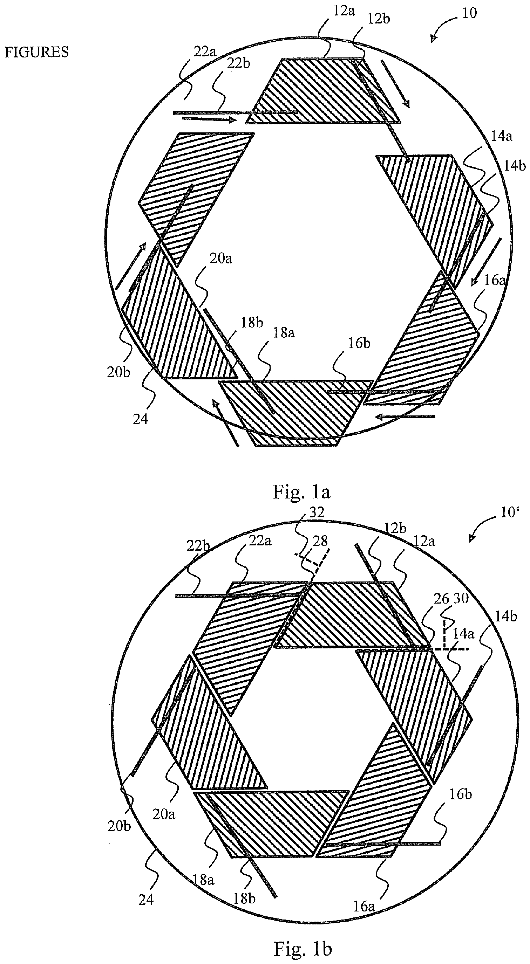

Fig. 1a is a schematic view of a suction hood system 10 according to an exemplary embodiment. The suction hood system 10 comprises a plurality of collecting units 12a-22a forming a ring-like shape around the center of the suction hood system 10. Each collecting unit 12a-22a of the plurality of collecting units 12a-22a is movably attached to a housing 24 of the suction hood system 10 via a bearing 12b-22b.

As indicated by the arrows in Fig. 1a, each collecting unit 12a-22a of the plurality of collecting units 12a-22a can be moved along a path enforced by the respective bearing 12b-22b between a first position as shown in Fig. 1a and a second position as shown in Fig. 1b. When the collecting units 12a-22a of the suction hood system 10 are moved as indicated by the arrows in Fig. 1a, the collecting units 12a-22a of the suction hood system 10 are moved closer to the center of the suction hood system 10 as shown in Fig. 1b. Thus, the bearings 12b-22b allow for adjusting the size of the space which is circumferentially enclosed or confined by the collecting units 12a-22a.

Furthermore, as shown in Figs. 1a and 1b, the plurality of collecting units 12a-22a form a ring-like shape when being in the first positions as well as when being in the second positions. Thus, a work piece placed within the suction hood systems 10, 10' is radially surrounded by collecting units 12a-22a so that cutting chips are jetted towards a collecting unit 12a-22a irrespective of the radial direction into which the cutting chips are directed by the machining tool.

As shown in Figs. 1a and 1b, the collecting unit 12a has a surface that is parallel to a surface of the adjacent (neighboring) collecting unit 14a. Furthermore, the collecting unit 12a has a surface that is parallel to a surface of the further adjacent collecting unit 22a so that the respective surfaces of the collecting units 12a, 14a, 22a define contact surfaces 26, 28 between the abutting collecting units 12a and 14a and 12a and 22a, respectively. For avoiding air flow through a gap between the abutting collecting units 12a, 14a, 22a, the contact surfaces 26, 28 may be provided with a sealing.

The shape of the collecting units 12a, 14a and 22a is designed such that the contact surface 26, 28 of each two abutting collecting units, 12a and 14a and 12a and 22a, respectively, is perpendicular to a corresponding bisecting line 30, 32 bisecting the angle between the directions of motion of the two abutting collecting units, 12a and 14a and 12a and 22a, respectively. As shown in Figs. 1a and 1b, this design rule applies to all collecting units 12a-22a and enforces that the collecting units 12a-22a are moved simultaneously while the abutting collecting units 12a-22a of each pair of adjacent collecting units 12a-22a slide along the contact surfaces relative to each other.

Thus, when the collecting units 12a-22a are moved between the first positions and the second positions, the ring-like shape of the plurality of collecting units 12a-22a is maintained such that adjusting the space enclosed or confined by the collecting units 12a-22a is possible even during machining, without opening up a gap between the collecting units 12a-22a through which cutting chips may escape.

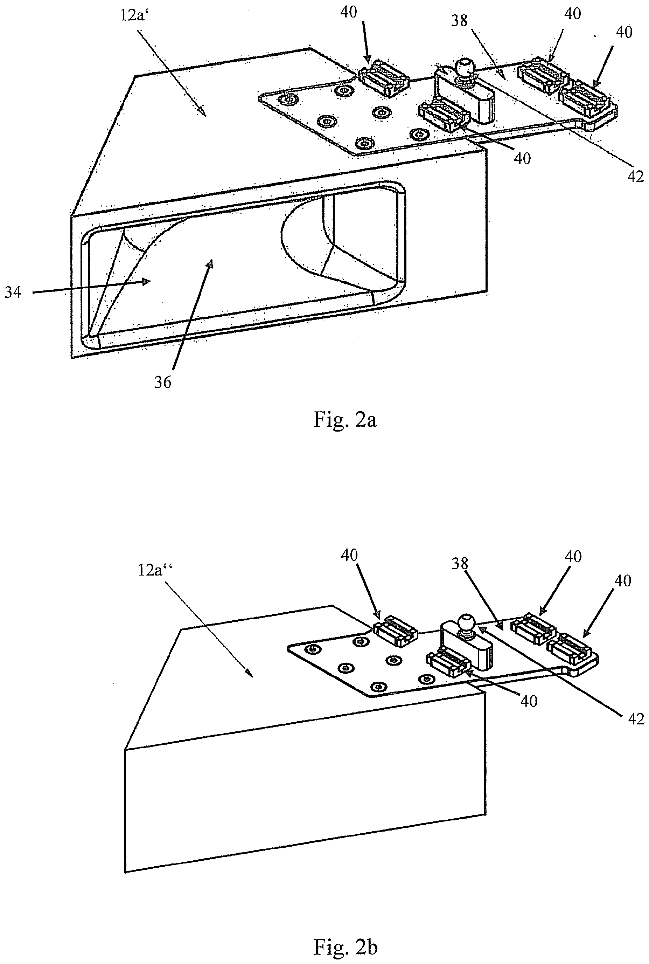

Fig. 2a shows a single collecting unit 12a in form of a suction hood 12a'. The suction hood 12a' has an opening 34 at its front side through which air is sucked into a space 36 inside the suction hood 12a'. The space 36 inside the suction hood 12a' is separated from ambient air by a plurality of walls. The suction hood 12a' further comprises an aperture (not shown) at a back side of the suction hood 12a' through which air can be drawn out of the suction hood 12a' via a pipe connected to the aperture. The suction hood 12a' is further provided with a push cap 38 having guiding carriages 40 and a ball pin 42 for moving the suction hood 12a' along a linear bearing as will be described in greater detail in the following.

Fig. 2b shows a single collecting unit in form of a blind slat 12a". The blind slat 12a" has a push cap 38 and dimensions identical to the push cap 38 and dimensions of the suction hood 12a' which allows to replace each suction hood 12a' with a blind slat 12a" and vice versa. Thus, the suction hood systems 10, 10' may be supplied with suction hoods 12a', blind slats 12a" or any combination of suction hoods 12a' and blind slats 12a".

However, unlike the suction hood 12a', the blind slat 12a" does neither have an opening 34 at its front side nor an aperture at its back side. Rather, the blind slat 12a" is a non-hollow structure defined by planar surfaces. If using a combination of suction hoods 12a' and blind slats 12a", cutting chips may be deflected by a blind slat 12a" and collected by a suction hood 12a'. If using a combination of suction hoods 12a' and blind slats 12a" or only blind slats 12a", cutting chips may be deflected by a blind slat 12a" and the cutting chips may be collected by sucking air toward an upper opening of the suction hood system 10, 10' by a central aspiration port through the center of the suction hood system 10, 10'.

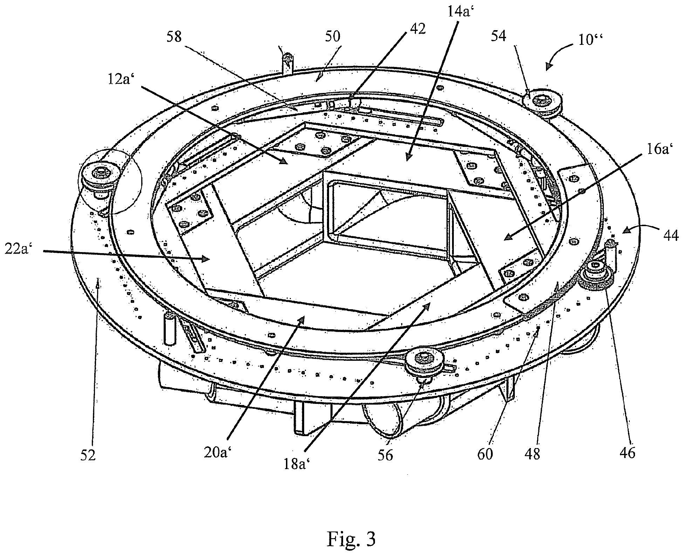

Fig. 3 shows a suction hood system 10" according to an exemplary embodiment, wherein the suction hood system 10" has a drive mechanism 44 for moving a plurality of suction hoods 12a'-22a' between first positions and second positions. The drive mechanism 44 comprises a gear 46 and a gear ring segment 48, wherein the gear 46 and the gear ring segment 48 engage with each other so that the gear ring segment 48 can be driven by driving the gear 46.

The drive mechanism 44 further comprises a drive ring 50 to which the gear ring segment 48 is attached and which is pivotally or rotatably connected to a plate 52 via three rolls 54 forming a pivot bearing for the drive ring 50, wherein each roll 54 is attached to the plate 52 by a hitch pin 56. Moreover, the drive mechanism 44 further comprises drive rods 58, and the drive ring 50 is connected to each ball pin 42 of the suction hoods 12a'-22a' by a corresponding drive rod 58.

Thus, upon rotation of the gear 46, the drive ring 50 rotates relative to the plate 52 around a rotation axis extending through the center of the suction hood system 10" and causes the suction hoods 12a'-22a' to move along linear bearings attached to the lower side of the plate 52 as indicated by the dotted lines 60.

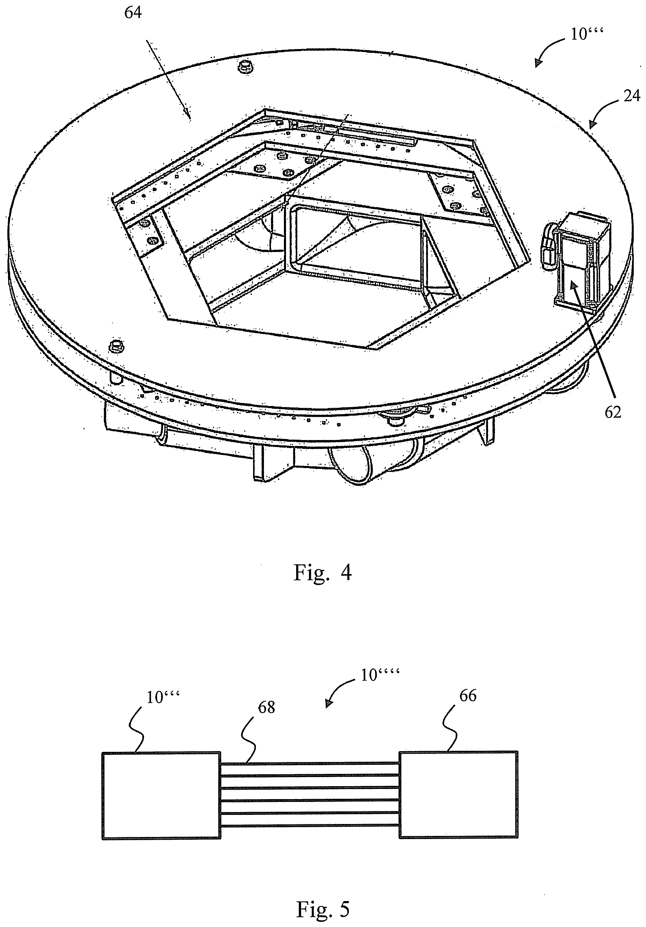

Fig. 4 shows a suction hood system 10'" according to an exemplary embodiment. The suction hood system 10'" is similar to the suction hood system 10" shown in Fig. 3 and additionally comprises an electrical drive 62 for moving the suction hoods 12a'-22a' between the first positions and the second positions. As an alternative to the electrical drive 62, the gear 46 may also be connected to a manual drive mechanism, so that rotation of the gear 46 may for example be controlled by rotating a knob of the manual drive mechanism.

Furthermore, the suction hood system 10"' comprises a cover plate 64, wherein the cover plate 64 and the plate 52 form the housing 24 of the suction hood system 10"'. Furthermore, the suction hood system 10'" may have a sealing such as strips (not shown) attached to the lower surfaces of the suction hoods 12a'-22a' for avoiding an air gap between the suction hood system 10'" and the work piece or a support on which the work piece is positioned.

Although Figs. 3 and 4 only show suction hood systems 10", 10'" having a plurality of suction hoods 12a'-22a', it is clear from the foregoing description that any number of suction hoods 12a'-22a' of the suction hood systems 10", 10'" may be replaced by blind slats 12a" so that the suction hood systems 10", 10'" may comprise any combination of suction hoods 12a'-22a' and blind slats 12a" or even only blind slats 12a".

Fig. 5 is a schematic view of a suction hood system 10"" according to an exemplary embodiment based on the exemplary embodiments described above, wherein the suction hood system 10'" is connected to a device 66 for sucking in air such as a vacuum source. Each suction hood 12a'-22a' of the suction hood system 10"" is connected to a first end of an air pipe 68, while a second end of the air pipe 68 is connected to the device 66 for sucking in air. Furthermore, the device 66 for sucking in air is configured to control the amount of air sucked through each air pipe 68 individually.

The examples described above and the drawings merely serve to illustrate the invention and its advantages over the prior art, and should not be understood as a limitation in any sense. The scope of the invention is solely determined by the appended set of claims.

### LIST OF REFERENCE SIGNS

- 10, 10': Suction hood system
- 10", 10"': Suction hood system
- 10"": Suction hood system
- 12a-22a: Collecting units
- 12a'-22a': Suction hoods
- 12a"-22a": Blind slats
- 12b-22b: Bearing
- 24: Housing
- 26, 28: Contact surfaces
- 30, 32: Bisecting lines
- 34: Opening
- 36: Space
- 38: Push cap
- 40: Guiding carriages
- 42: Ball pin
- 44: Drive mechanism
- 46: Gear
- 48: Gear ring segment
- 50: Drive ring
- 52: Plate
- 54: Roll
- 56: Hitch pin
- 58: Drive rod
- 60: Dotted line, indication of linear bearing
- 62: Electric drive
- 64: Cover plate
- 66: Device for sucking in air
- 68: Air pipe

## Claims

1. A suction hood system (10, 10', 10", 10"', 10""), comprising:
a housing (24); and
a plurality of collecting units (12a-22a),
wherein each collecting unit (12a-22a) of the plurality of collecting units (12a-22a) is movably attached to the housing (24) via a bearing (12b-22b) and configured to be movable between a first position and a second position; and
wherein neighboring collecting units (12a-22a) among the plurality of collecting units (12a-22a) abut on each other when being in the first positions and abut on each other when being in the second positions;
wherein the plurality of collecting units (12a-22a) forms a ring-like shape when being in the first positions;
wherein the plurality of collecting units (12a-22a) forms a ring-like shape when being in the second positions;
**characterized in that**
some or all of the bearings (12b-22b) are linear bearings and the bearings (12b-22b) allow for adjusting a size of a space circumferentially enclosed or confined by the collecting units (12a-22a), wherein each collecting unit (12a-22a) has a first surface that is parallel to a surface of a first abutting collecting unit (12a-22a) and a second surface that is parallel to a surface of a second abutting collecting unit (12a-22a), wherein a contact surface (26, 28) of two abutting collecting units (12a, 14a, 22a) is perpendicular to a bisecting line (30, 32) bisecting an angle between the directions of motion of the two abutting collecting units (12a, 14a, 22a).

2. The suction hood system (10, 10', 10", 10"', 10"") of claim 1, further comprising a drive mechanism (44) for moving the plurality of collecting units (12a-22a) between the first positions and the second positions.

3. The suction hood system (10, 10', 10", 10"', 10"") of one of claims 1 or 2, wherein the number of collecting units (12a-22a) is greater than 2 and preferably 6 or 12.

4. The suction hood system (10, 10', 10", 10"', 10"") of one of claims 1 to 3, wherein the housing (24) further comprises a plate (52) having an opening around which the collecting units (12a-22a) are movably attached.

5. The suction hood system (10, 10', 10", 10"', 10"") of claim 4,
wherein the collecting units (12a-22a) are connected to a drive ring (50) via drive rods (58); or
wherein the collecting units (12a-22a) are connected to the drive ring (50) via a rotary cam and driving pin.

6. The suction hood system (10, 10', 10", 10"', 10"") of claim 5, wherein the drive ring (50) is connected to the plate (52) via a pivot bearing.

7. The suction hood system (10, 10', 10", 10"', 10"") of claim 6, wherein the drive ring (50) has a gear ring segment (48) which is coupled to a drive.

8. The suction hood system (10, 10', 10", 10"', 10"") of one of the preceding claims, wherein
at least one collecting unit (12a-22a) is a suction hood (12a'-22a') and at least one collecting unit (12a-22a) is a blind slat (i2a"-22a"); or
at least one collecting unit (12a-22a) is a suction hood (12a'-22a') and at least two collecting units (12a-22a) are blind slats (12a"-22a"); or
at least two collecting units (12a-22a) are suctions hoods (12a'-22a') and at least one collecting unit (12a-22a) is a blind slat (12a"-22a"); or
all collecting units (12a-22a) of the plurality of collecting units (12a-22a) are suction hoods (12a'-22a'); or
all collecting units (12a-22a) of the plurality of collecting units (12a-22a) are blind slats (12a"-22a").

9. The suction hood system (10"") of claim 8, further comprising:
a device (66) for sucking in air;
wherein each suction hood (12a-22a) has an aperture that is connected to a first end of an air pipe (68);
wherein a second end of said air pipe (68) is connected with the device (66) for sucking in air; and
wherein the device (66) is preferably configured to control the amount of air sucked in through each air pipe (68) individually; and/or
wherein the suction hood system (10"") is connected to a central extraction socket.

10. A method for operating a machining center, including the steps of:
positioning a suction hood system (10, 10', 10", 10"', 10"") according to any of claims 1 to 9 relative to a work piece; and
machining the work piece.

## Patentansprüche

1. Abzugshaubensystem (10, 10', 10", 10"', 10""), das Folgendes umfasst:
ein Gehäuse (24); und
eine Mehrzahl von Sammeleinheiten (12a-22a),
wobei eine jede Sammeleinheit (12a-22a) aus der Mehrzahl von Sammeleinheiten (12a-22a) beweglich an dem Gehäuse (24) über ein Lager (12b-22b) befestigt ist und dazu konfiguriert ist, zwischen einer ersten Position und einer zweiter Position beweglich zu sein; und
wobei benachbarte Sammeleinheiten (12a-22a) aus der Mehrzahl von Sammeleinheiten (12a-22a) aneinander anliegen, wenn sie sich in den ersten Positionen befinden, und aneinander anliegen, wenn sie sich in den zweiten Positionen befinden;
wobei die Mehrzahl von Sammeleinheiten (12a-22a) eine Ringform bilden, wenn sie sich in den ersten Positionen befinden;
wobei die Mehrzahl von Sammeleinheiten (12a-22a) eine Ringform bilden, wenn sie sich in den zweiten Positionen befinden;
**dadurch gekennzeichnet, dass**
einige oder alle Lager (12b-22b) Linearlager sind und die Lager (12b-22b) es gestatten, die Größe eines Raums einzustellen, der durch die Sammeleinheiten (12a-22a) in Umfangsrichtung eingeschlossen wird, wobei eine jede Sammeleinheit (12a-22a) eine erste Fläche hat, die parallel zu einer Fläche einer ersten anliegenden Sammeleinheit (12a-22a) ist, und eine zweite Fläche hat, die parallel zu einer Fläche einer zweiten anliegenden Sammeleinheit (12a-22a) ist, wobei eine Kontaktfläche (26, 28) der zwei aneinander anliegenden Einheiten (12a, 14a, 22a) senkrecht zu einer Winkelhalbierenden (30, 32) ist, die ein Winkel zwischen den Richtungen der Bewegung der beiden aneinander anliegenden Sammeleinheiten (12a, 14a, 22a) teilt.

2. Abzugshaubensystem (10, 10', 10", 10"', 10"") nach Anspruch 1, welches ferner einen Antriebsmechanismus (44) zum Bewegen der Mehrzahl von Sammeleinheiten (12a-22a) zwischen den ersten und den zweiten Positionen umfasst.

3. Abzugshaubensystem (10, 10', 10", 10'", 10"") nach einem der Ansprüche 1 oder 2, wobei die Anzahl der Sammeleinheiten (12a-22a) größer als 2 ist, und vorzugsweise 6 oder 12 beträgt.

4. Abzugshaubensystem (10, 10', 10", 10"', 10"") nach einem der Ansprüche 1 bis 3, wobei das Gehäuse (24) ferner eine Platte (52) umfasst, die eine Öffnung aufweist, um die die Sammeleinheiten (12a-22a) beweglich angebracht sind.

5. Abzugshaubensystem (10, 10', 10", 10"', 10"") nach Anspruch 4,
wobei die Sammeleinheiten (12a-22a) mit einem Antriebsring (50) über Antriebsstangen (58) verbunden sind, oder
wobei die Sammeleinheiten (12a-22a) über eine Drehnocke und einen Antriebsstift mit dem Antriebsring (50) verbunden sind.

6. Abzugshaubensystem (10, 10', 10", 10"', 10"") nach Anspruch 5, wobei der Antriebsring (50) über ein Schwenklager mit der Platte (52) verbunden ist.

7. Abzugshaubensystem (10, 10', 10", 10"', 10"") nach Anspruch 6, wobei der Antriebsring (50) ein Zahnringsegment (48) hat, das mit einem Antrieb gekoppelt ist.

8. Abzugshaubensystem (10, 10', 10", 10"', 10"") nach einem der folgenden Ansprüche, wobei
mindestens eine Sammeleinheit (12a-22a) eine Abzugshaube (12a'-22a') ist, und mindestens eine Sammeleinheit (12a-22a) eine Jalousielamelle (12a"-22a") ist, oder mindestens eine Sammeleinheit (12a-22a) eine Abzugshaube (12a'-22a') und mindestens zwei Sammeleinheiten (12a-22a) Jalousielamellen (12a"-22a") sind; oder
wobei mindestens zwei Sammeleinheiten (12a-22a) Abzugshauben (12a'-22a') sind und mindestens eine Sammeleinheit (12a-22a) eine Jalousielamelle (12a"-22a") ist; oder
sämtliche Sammeleinheiten (12a-22a) der Mehrzahl von Sammeleinheiten (12a-22a) Abzugshauben (12a'-22a') sind; oder
sämtliche Sammeleinheiten (12a-22a) der Mehrzahl von Sammeleinheiten (12a-22a) Jalousielamellen (12a"-22a") sind.

9. Abzugshaubensystem (10"") nach Anspruch 8, das ferner Folgendes umfasst:
eine Einrichtung (66) zum Einsaugen von Luft;
wobei eine jede Abzugshaube (12a-22a) eine Öffnung hat, die mit einem ersten Ende eines Luftrohrs (68) verbunden ist;
wobei ein zweites Ende des Luftrohrs (68) mit der Einrichtung (66) zum Ansaugen von Luft verbunden ist; und
wobei die Einrichtung (66) vorzugsweise dazu konfiguriert ist, die Menge von Luft, die durch ein jedes Luftrohr (68) eingesaugt wird, individuell zu steuern; und/oder wobei das Abzugshaubensystem (10"") mit einem zentralen Abzugssockel verbunden ist.

10. Verfahren zum Betrieb eines Bearbeitungszentrums, das die folgenden Schritte umfasst:
Positionieren eines Abzugshaubensystems (10, 10', 10", 10"', 10"") nach einem der Ansprüche 1 bis 9 relativ zu einem Werkstück; und
Bearbeiten des Werkstücks.

## Revendications

1. Système de hotte d'aspiration (10, 10', 10", 10"', 10"") comprenant :
un boîtier (24) ; et
une pluralité d'unités de collecte (12a-22a),
dans lequel chaque unité de collecte (12a-22a) de la pluralité d'unités de collecte (12a-22a) est fixée de manière mobile sur le boîtier (24) via un palier (12b-22b) et configurée pour être mobile entre une première position et une seconde position ; et
dans lequel les unités de collecte voisines (12a-22a) parmi la pluralité d'unités de collecte (12a-22a) viennent en butée les unes contre les autres lorsqu'elles sont dans les premières positions et viennent en butée les unes contre les autres lorsqu'elles sont les secondes positions ;
dans lequel la pluralité d'unités de collecte (12a-22a) forment une forme annulaire lorsqu'elles sont dans les premières positions ;
dans lequel la pluralité d'unités de collecte (12a-22a) forment une forme annulaire lorsqu'elles sont dans les secondes positions ;
**caractérisé en ce que** :
certains ou la totalité des paliers (12b-22b) sont des paliers linéaires et les paliers (12b-22b) permettent d'ajuster une taille d'un espace circonférentiellement clos ou confiné par les unités de collecte (12a-22a), dans lequel chaque unité de collecte (12a-22a) a une première surface qui est parallèle à une surface d'une première unité de collecte en butée (12a-22a) et une seconde surface qui est parallèle à une surface d'une seconde unité de collecte en butée (12a-22a), dans lequel une surface de contact (26, 28) de deux unités de collecte en butée (12a, 14a, 22a) est perpendiculaire à une ligne bissectrice (30, 32) coupant un angle en deux entre les directions de déplacement des deux unités de collecte de butée (12a, 14a, 22a).

2. Système de hotte d'aspiration (10, 10', 10", 10'", 10"") selon la revendication 1, comprenant en outre un mécanisme d'entraînement (44) pour déplacer la pluralité d'unités de collecte (12a-22a) entre les premières positions et les secondes positions.

3. Système de hotte d'aspiration (10, 10', 10", 10'", 10"") selon l'une des revendications 1 ou 2, dans lequel l'élément des unités de collecte (12a-22a) est supérieur à 2 et de préférence 6 ou 12.

4. Système de hotte d'aspiration (10, 10', 10", 10"', 10"") selon l'une des revendications 1 à 3, dans lequel le boîtier (24) comprend en outre une plaque (52) ayant une ouverture autour de laquelle les unités de collecte (12a-22a) sont fixées de manière mobile.

5. Système de hotte d'aspiration (10, 10', 10", 10'", 10"") selon la revendication 4,
dans lequel les unités de collecte (12a-22a) sont raccordées à une bague d'entraînement (50) via des tiges d'entraînement (58) ; ou bien
dans lequel les unités de collecte (12a-22a) sont raccordées à la bague d'entraînement (50) via une came rotative et une broche d'entraînement.

6. Système de hotte d'aspiration (10, 10', 10", 10'", 10"") selon la revendication 5, dans lequel la bague d'entraînement (50) est raccordée à la plaque (52) via un palier de pivot.

7. Système de hotte d'aspiration (10, 10', 10", 10'", 10"") selon la revendication 6, dans lequel la bague d'entraînement (50) a un segment de bague d'engrenage (48) qui est couplé à un entraînement.

8. Système de hotte d'aspiration (10, 10', 10", 10'", 10"") selon l'une des revendications précédentes, dans lequel :
au moins une unité de collecte (12a-22a) est une hotte d'aspiration (12a'-22a') et au moins une unité de collecte (12a-22a) et une lame borgne (12a"-22a") ; ou bien au moins une unité de collecte (12a-22a) est une hotte d'aspiration (12a'-22a') et au moins deux unités de collecte (12a-22a) sont des lames borgnes (12a"-22a") ; ou bien au moins deux unités de collecte (12a-22a) sont des hottes d'aspiration (12a'-22a') et au moins une unité de collecte (12a-22a) est une lame borgne (12a"-22a") ; ou bien toutes les unités de collecte (12a-22a) de la pluralité d'unités de collecte (12a-22a) sont des hottes d'aspiration (12a'-22a') ; ou bien
toutes les unités de collecte (12a-22a) de la pluralité d'unités de collecte (12a-22a) sont des lames borgnes (12a"-22a").

9. Système de hotte d'aspiration (10"") selon la revendication 8, comprenant en outre :
un dispositif (66) pour aspirer l'air ;
dans lequel chaque hotte d'aspiration (12a-22a) a une ouverture qui est raccordée à une première extrémité d'un tuyau d'air (68) ;
dans lequel une seconde extrémité dudit tuyau d'air (68) est raccordée avec le dispositif (66) pour aspirer l'air ; et
dans lequel le dispositif (66) est configuré, de préférence, pour contrôler la quantité d'air aspiré par chaque tuyau d'air (68) individuellement ; et/ou dans lequel le système de hotte d'aspiration (10"") est raccordé à une douille d'extraction centrale.

10. Procédé pour actionner un centre d'usinage, comprenant les étapes consistant à :
positionner un système de hotte d'aspiration (10, 10', 10", 10"', 10"") selon l'une quelconque des revendications 1 à 9, par rapport à une pièce à usiner ; et
usiner la pièce à usiner.
